# DEMANDE DE BREVET EUROPEEN

(11) **EP 1 767 259 A2**
(43) Date de publication de la demande: **28.03.2007**
(21) Numéro de dépôt: 06300915.3
(22) Date de dépôt: 01.09.2006
(51) Int. Cl.: B01D 45/04

(54) **Filtre pour fluide gazeux**

(30) Priorité: 27.09.2005 FR 0552903
(71) Demandeur: Renault s.a.s., 92100 Boulogne Billancourt (FR)
(72) Inventeur: Rodolausse, Joan, 92290 Chatenay-Malabry (FR); Touaty Muriel, 75015 Paris (FR); Cheze, Frédéric, 78370 Plaisir (FR); Battistoni, François, 69230, ST Genis Laval (FR)

(57) **Abrégé**

Un filtre pour fluide gazeux est du type comprenant un séparateur (1), apte à retenir des particules solides présentes dans le fluide gazeux, possédant une face perméable d'entrée (2) et une face perméable de sortie (3), le fluide gazeux passant de la face d'entrée (2) à la face de sortie (3), et une série de lames (7) se déployant entre ladite face d'entrée (2) et ladite face de sortie (3) et définissant une série de fentes d'entrée (4) pour ledit fluide gazeux sur ladite face d'entrée (2) et une série de fentes de sortie (6) pour ledit fluide gazeux sur ladite face de sortie (3).

Les lames (7) présentent chacune, en projection dans un plan (P) perpendiculaire à la série de fentes d'entrée (4) et à la série de fentes de sortie (6), une forme incurvée, de façon à créer une chambre (16) de captation et de stockage de particules solides.

## Description

### DOMAINE TECHNIQUE

La présente invention concerne un filtre destiné à assurer une filtration d'un ou plusieurs fluides gazeux, le filtre étant plus particulièrement destiné aux véhicules automobiles. L'invention se rapporte ainsi à la constitution d'un matériau de séparation ou séparateur pour différents gaz, constituant ce filtre.

Afin de permettre au conducteur et aux passagers d'être correctement et confortablement installés dans l'habitacle d'un véhicule automobile, l'air entrant dans l'habitacle a besoin d'être sensiblement plus pur que l'air extérieur. Du fait de l'aspect confiné du volume de l'habitacle, les différents polluants présents dans l'air ont en effet tendance à s'y concentrer. Il s'ensuit une gêne pour les occupants. Les particules solides sont constituées par des poussières de terres, de sables, de roches, par des pollens, par des particules artificielles etc. Certains pays émergeants sont dits « à fort empoussièrement », de par la nature des terrains rencontrés, des routes et de la faible pluviométrie.

Il s'avère principalement nécessaire de dégager l'air de ses particules. A plus forte raison, ceci est le cas si l'air extérieur transite par une installation de chauffage et/ou de climatisation, avant d'être remis en circulation vers l'habitacle. La présence de fortes concentrations en particules solides donne un encrassement complet de cette installation, conduisant à une diminution du rendement de chauffe et/ou refroidissement, voire à une panne. Pour diverses raisons, le conducteur peut également être amené à mettre l'aération de l'habitacle en position de circuit fermé, empêchant totalement un renouvellement de l'air. Les fluides gazeux chargés de particules solides ont besoin d'être traités, afin de les débarrasser de ces mêmes particules.

### ÉTAT DE LA TECHNIQUE ANTÉRIEURE

De manière traditionnelle, les filtres comprennent une membrane poreuse repliée en accordéon. Les plis parallèles définissent entre eux des fentes d'entrée et de sortie. Les filtres pour habitacles utilisés dans les véhicules vendus dans les pays émergents sont configurés pour la granulométrie des poussières rencontrées dans la plupart des pays européens. Une telle granulométrie se caractérise par de très fines particules. Or, dans la plupart des pays émergents, les particules en suspension dans l'air sont comparativement beaucoup plus grosses.

Ceci conduit à un colmatage rapide des filtres, par accumulation dans les plis de la membrane poreuse, avec de ce fait une perte de débit en sortie des aérateurs. L'aération de l'habitacle n'est plus réalisée de manière satisfaisante pour l'utilisateur. Le filtre doit souvent être changé, induisant un surcoût lors des réparations. Pour éviter un nouveau colmatage, une autre manière de faire consiste à enlever le filtre bouché sans le remplacer. L'utilisateur perd alors la prestation et les avantages liés à la qualité de l'air de l'habitacle de son véhicule.

Pour filtrer l'air, la Demanderesse a déjà développé un système de filtre dit « minicyclones ». Son principe est celui d'utiliser une centrifugation des particules par des ailettes fixes et une récupération des particules par des fentes annulaires.

Cependant, bien que performant, ce filtre est encombrant, ce qui limite son transfert vers de petits véhicules, pourtant nombreux dans les pays émergeants.

### EXPOSÉ DE L'INVENTION

Un problème principal que se propose de résoudre l'invention consiste à mettre au point un filtre destiné à être intercalé entre une aspiration d'air et un habitacle de véhicule automobile. Un deuxième problème est de prévoir un filtre pouvant se loger dans un compartiment filtre du boîtier de climatisation, en lieu et place du filtre classique, dans un contexte de réduction des dimensions du boîtier de climatisation et de limitation en termes de pertes de charge. Un troisième problème est de réaliser un filtre adapté aux grosses particules, qui ne se colmate que beaucoup plus lentement.

L'invention concerne donc un filtre pour fluide gazeux, du type comprenant un séparateur, apte à retenir des particules présentes dans le fluide gazeux. Le séparateur possède une face perméable d'entrée et une face perméable de sortie, le fluide gazeux passant de la face d'entrée à la face de sortie. Le séparateur présente en outre une série de lames se déployant entre cette face d'entrée et cette face de sortie. La série de lames définit une série de fentes d'entrée pour ce fluide gazeux sur cette face d'entrée et une série de fentes de sortie pour ce fluide gazeux sur cette face de sortie.

Conformément à un aspect de la présente invention, le filtre est caractérisé en ce que les lames présentent chacune, en projection dans un plan perpendiculaire aux fentes d'entrée et aux fentes de sortie, une forme incurvée, de façon à créer une chambre de captation et de stockage de particules.

Autrement dit, en modifiant la forme des lames constitutives du séparateur, les propriétés de filtrage de ce même séparateur changent. Selon la propriété de la mécanique des fluides connue sous le nom d'effet Coanda, le fluide entrant dans le séparateur se transforme en un jet de fluide gazeux pariétal qui suit la courbure de la paroi de la lame. Les particules en suspension dans le fluide vont alors décoller de la paroi, conduisant par la suite à leur dépôt.

En réalisant une courbure pour chacune des lames entre les fentes d'entrée et les fentes de sortie, les particules restent confinées au niveau d'une zone ménagée entre les lames. Le flux d'air chargé en particules rentre par les fentes dans le filtre, suit la paroi interne qui est orientée de façon à ce que les particules contenues dans le flux décollent de la paroi pour s'échapper du flux par gravité et pour rester confinées, alors que le flux d'air est librement évacué par une fente de sortie. Les particules ciblées sont retenues efficacement avec une perte de charge adaptée.

La forme incurvée de la lame peut avantageusement posséder, en projection dans un plan perpendiculaire aux fentes d'entrée et aux fentes de sortie, un point d'inflexion. La lame possède globalement une conformation en « S ». La forme incurvée de la lame peut également posséder, en projection dans un plan perpendiculaire aux fentes d'entrée et aux fentes de sortie, une courbure concave du côté de la fente d'entrée suivie par une courbure convexe du côté de la fente de sortie. Le terme concave se définit en étant placé au niveau de la fente d'entrée. Le terme convexe se définit en étant placé au niveau de la fente de sortie.

Avec un premier segment de la forme présentant une concavité, le fluide gazeux va entamer le début d'un mouvement circulaire en longeant la paroi de la lame. Et avec un deuxième segment de la forme présentant une convexité, le fluide gazeux va être rejeté en direction de la face d'entrée, pour terminer le mouvement circulaire préalablement entamé au niveau de la courbure concave.

De préférence, les lames peuvent présenter chacune, en projection dans un plan perpendiculaire aux fentes d'entrée et aux fentes de sortie, une partie plane de sortie, disposée du côté de la face de sortie, reliée à la forme incurvée et sensiblement parallèle à ladite face de sortie. Les particules devant être éliminées du fluide gazeux restent bloquées par la partie plane de sortie, au niveau de la fente de sortie.

Les lames peuvent favorablement présenter chacune, en projection dans un plan perpendiculaire aux fentes d'entrée et aux fentes de sortie, un rebord libre d'entrée, disposé du côté de la face d'entrée et sensiblement orienté en direction de la face de sortie. Le rebord libre d'entrée de l'une des lames peut être, en projection dans un plan perpendiculaire aux fentes d'entrée et aux fentes de sortie, sensiblement de même courbure que la forme incurvée de l'autre des lames immédiatement adjacente. La fente d'entrée du fluide gazeux peut être délimitée par le rebord libre d'entrée de l'une des lames et par la forme incurvée de l'autre des lames immédiatement adjacente.

Le rebord libre d'entrée a ainsi pour objectif et de favoriser un mouvement circulaire du fluide gazeux le long de la courbure intérieure de la lame.

Les lames peuvent favorablement présenter chacune, en projection dans un plan perpendiculaire aux fentes d'entrée et aux fentes de sortie, un rebord libre de sortie, disposé du côté de la face de sortie et sensiblement orienté en direction de la face d'entrée. Le rebord libre de sortie de l'une des lames peut être, en projection dans un plan perpendiculaire aux fentes d'entrée et aux fentes de sortie, sensiblement de même courbure que la forme incurvée de l'autre des lames immédiatement adjacente. La fente de sortie du fluide gazeux peut être délimitée par le rebord libre de sortie de l'une des lames et par la forme incurvée de l'autre des lames immédiatement adjacente.

Le rebord libre de sortie a ainsi pour objectif de limiter très fortement toute échappée de particules. Les particules sont ainsi recueillies par gravité entre le deuxième segment convexe de la lame, la partie plane de sortie et le rebord libre de sortie.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue en perspective du dessus du séparateur ; et
- la Figure 2 représente une vue en coupe longitudinale du séparateur selon l'invention.

### EXPOSÉ DÉTAILLÉ D'UN MODE DE RÉALISATION PRÉFÉRÉ

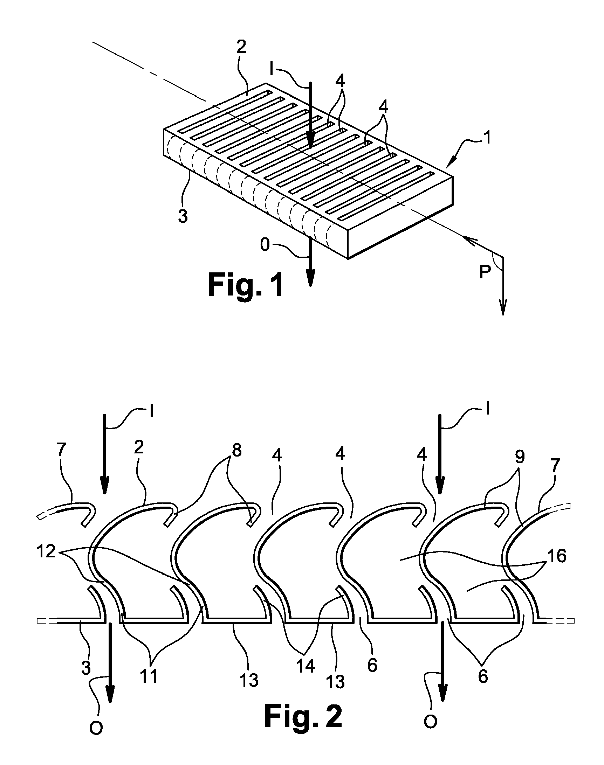

Comme l'illustre la Figure 1, un filtre comprend un boîtier, avec une entrée pour un fluide gazeux vicié, ici de l'air chargé de particules solides, et une sortie pour le fluide gazeux libéré des particules. Le filtre comprend un séparateur (1), chargé de la purification. Le séparateur (1) se présente sous la forme d'un parallélépipédique rectangle. Le séparateur (1) possède ainsi une face principale amont ou face d'entrée (2) et une face principale aval ou face de sortie (3).

La face d'entrée (2) présente une série de fentes d'entrée (4) et la face de sortie (3) présente une série de fentes de sortie (6). L'air entre (Flèches I en Figures 1 et 2) donc par les fentes d'entrée (4) et ressort (Flèches O en Figure 1 et 2) par les fentes de sortie (6). L'ensemble des fentes d'entrée (4) est disposé transversalement par rapport au séparateur (1). L'ensemble des fentes de sorties (6) est disposé transversalement par rapport au séparateur (1). Les fentes d'entrée (4) et les fentes de sortie (6) sont prévues en étant perpendiculaires au plan longitudinal médian (P) du séparateur (1).

En effectuant une projection dans un plan perpendiculaire à la série de fentes d'entrée (4) et à la série de fentes de sortie (6), par exemple dans le plan longitudinal médian (P), les fentes d'entrée (4) sont sensiblement en regard des ou alignés avec les fentes de sortie (6).

Le séparateur (1) possède une série de lamelles ou lames (7), s'étendant entre la face d'entrée (2) et la face de sortie (3). La totalité de la description qui suit se fait en se référant à la Figure 2, et en regardant une projection effectuée dans un plan perpendiculaire à la série de fentes d'entrée (4) et à la série de fentes de sortie (6), par exemple dans le plan longitudinal médian (P). Les lames (7) forment des parois successives, assurant la filtration. Les lames (7) sont parallèles aux fentes d'entrée (4) et aux fentes de sortie (6). Les lames (7) permettent une délimitation des fentes d'entrée (4) et des fentes de sortie (6). Les lames (7) sont à équidistance les unes des autres.

Conformément à l'invention, les lames (7) présentent une forme courbée ou incurvée. La forme incurvée assure l'écoulement pariétal de l'air suivant la courbure. La courbure de la lame (7) génère l'effet Coanda, qui permet une séparation efficace des particules solides présentes dans l'air.

La forme incurvée pour la lame (7) comprend tout d'abord une extrémité ou un rebord libre d'entrée (8), disposé du côté de la face d'entrée (2). Le rebord d'entrée (8) est sensiblement orienté en direction de la face de sortie (3), tout en étant légèrement en biais, par rapport à la perpendiculaire aux faces d'entrée (2) et de sortie (3) située dans le plan longitudinal médian (P).

Après le rebord d'entrée (8), la forme incurvée pour la lame (7) se poursuit par un premier segment (9). Le premier segment (9) s'étend sur plus de la moitié de la hauteur de la lame (7). Le premier segment (9) des lames (7) forme, dans sa partie supérieure et par son côté externe, la face d'entrée (2). Le premier segment (9) possède une forme concave, qui s'apprécie en étant placé au niveau de la fente d'entrée (4) de la lame (7) la plus proche du rebord d'entrée (8). Le rebord d'entrée (8) est à peu près de même courbure que la forme concave du côté externe du premier segment (9) de la lame (7) immédiatement adjacente. La fente d'entrée (4) est délimitée par le rebord d'entrée (8) et la forme concave du côté externe du premier segment (9) de la lame (7) qui est immédiatement adjacente.

Après le premier segment (9), la forme incurvée pour la lame (7) se poursuit par un deuxième segment (11). La transition entre le premier segment (9) et le deuxième segment (11) se fait par une ligne d'inflexion (12), parallèle aux fentes d'entrée (4) et de sortie (6). Le deuxième segment (11) s'étend sur moins de la moitié de la hauteur de la lame (7). Le deuxième segment (11) arrive ainsi jusqu'au niveau de la face de sortie (3). Le deuxième segment (11) possède une forme convexe, qui s'apprécie en étant placé au niveau de la fente d'entrée (4) la plus proche du rebord d'entrée (8) ou en étant placé au niveau de la fente de sortie (6).

Après le deuxième segment (11), la forme incurvée pour la lame (7) se poursuit par une partie plane de sortie (13). La partie plane de sortie (13) est ainsi sensiblement parallèle à la face de sortie (3). Le côté externe de la partie plane de sortie (13) des lames (7) forme la totalité de la face de sortie (3).

Ensuite, après la partie plane de sortie (13), la forme incurvée pour la lame (7) se termine par une extrémité ou un rebord libre de sortie (14). Le rebord de sortie (14) est sensiblement orienté en direction de la face d'entrée (2), tout en étant légèrement en biais, par rapport à la perpendiculaire aux faces d'entrée (2) et de sortie (3) située dans le plan longitudinal médian (P). Le rebord de sortie (14) est à peu près de même courbure que la forme convexe du côté externe du deuxième segment (12) de la lame (7) immédiatement adjacente. La fente de sortie (6) est délimitée par le rebord de sortie (14) et la forme convexe du côté externe du deuxième segment (11) de la lame (7) qui est immédiatement adjacente.

L'air à dépolluer arrive (I) sur la face d'entrée (2) et entre donc par les fentes d'entrée (4). L'air glisse sur le côté externe du premier segment (9) d'une lame (7) située juste à côté, puis dépasse le rebord d'entrée (8). L'air pénètre dans une chambre (16) formée par la courbure concave du côté interne du premier segment (9), par la courbure convexe du côté interne du deuxième segment (11) et par le côté interne de la partie plane de sortie (13). L'air va suivre une trajectoire pariétale et circulaire le long de ces côtés internes à l'intérieur de cette chambre (16). Les particules de poussières en suspension dans l'air tombent par gravité et se déposent sur le côté interne de la partie plane de sortie (13). L'air dépoussiéré passe enfin entre le côté externe du rebord de sortie (14) et le côté externe du deuxième segment (11) d'une lame (7) située juste à côté et ressort (O) par les fentes de sortie (6).

Au cours de la vie du séparateur (1), le stock de particules solides est maintenu par côté interne du deuxième segment (11), par le côté interne de la partie plane de sortie (13) et par le côté interne du rebord de sortie (14).

La présente invention n'est pas limitée aux modes de réalisation décrits et illustrés. De nombreuses modifications peuvent être réalisées, sans pour autant sortir du cadre défini par la portée du jeu de revendications.

Par de nouvelles dimensions pour les lames (7) et par des courbures appropriées, la présente invention s'applique à de nombreux fluides gazeux chargés de particules devant être éliminées. Le côté interne de la lame (7) peut également être traitée, afin d'accrocher les particules et ainsi éviter leurs rebonds sur la lame (7) et/ou leur évacuation par la fente de sortie (6). Dans un mode de réalisation particulier, un matériau polymère, un tissu non-tissé et/ou un tapissage par projection de fibres de verre collées à la surface est utilisé.

Dans le domaine de l'automobile, il est envisagé par exemple la filtration de l'air destiné au moteur à combustion interne ou encore la filtration des gaz d'échappement. Dans un autre mode d'utilisation envisageable, le filtre peut être utilisé afin d'assurer une séparation air/eau.

## Revendications

1. Filtre pour fluide gazeux, du type comprenant un séparateur (1), apte à retenir des particules présentes dans le fluide gazeux, possédant une face perméable d'entrée (2) et une face perméable de sortie (3), le fluide gazeux passant de la face d'entrée (2) à la face de sortie (3), et une série de lames (7) se déployant entre ladite face d'entrée (2) et ladite face de sortie (3) et définissant une série de fentes d'entrée (4) pour ledit fluide gazeux sur ladite face d'entrée (2) et une série de fentes de sortie (6) pour ledit fluide gazeux sur ladite face de sortie (3), les lames (7) présentant chacune une forme incurvée, en projection dans un plan (P) perpendiculaire à la série de fentes d'entrée (4) et à la série de fentes de sortie (6), de façon à créer une chambre (16) de captation et de stockage de particules solides,
**caractérisé en ce que** les lames (7) présentent chacune, en projection dans un plan (P) perpendiculaire aux fentes d'entrée (4) et aux fentes de sortie (6), un rebord libre d'entrée (8), disposé du côté de la face d'entrée (2) et sensiblement orienté en direction de la face de sortie (3).

2. Filtre selon la revendication 1, **caractérisé en ce que** la forme incurvée possède, en projection dans un plan (P) perpendiculaire aux fentes d'entrée (4) et aux fentes de sortie (6), un point d'inflexion (12).

3. Filtre selon la revendication 1 ou 2, **caractérisé en ce que** la forme incurvée possède, en projection dans un plan (P) perpendiculaire aux fentes d'entrée (4) et aux fentes de sortie (6), une courbure concave (9) du côté de la fente d'entrée (4) suivie par une courbure convexe (11) du côté de la fente de sortie (6).

4. Filtre selon l'une quelconque des revendications précédentes, **caractérisé en ce que** les lames (7) présentent chacune, en projection dans un plan (P) perpendiculaire aux fentes d'entrée (4) et aux fentes de sortie (6), une partie plane de sortie (13), disposée du côté de la face de sortie (3), reliée à la forme incurvée et sensiblement parallèle à ladite face de sortie (3).

5. Filtre selon l'une quelconque des revendications précédentes, **caractérisé en ce que** le rebord libre d'entrée (8) de l'une des lames (7) est, en projection dans un plan (P) perpendiculaire aux fentes d'entrée (4) et aux fentes de sortie (6), sensiblement de même courbure que la forme incurvée (9) de l'autre des lames immédiatement adjacente (7).

6. Filtre selon l'une quelconque des revendications précédentes, **caractérisé en ce que** la fente d'entrée (4) est délimitée par le rebord libre d'entrée (8) de l'une des lames (7) et par la forme incurvée (9) de l'autre des lames immédiatement adjacente (7).

7. Filtre selon l'une quelconque des revendications précédentes, **caractérisé en ce que** les lames (7) présentent chacune, en projection dans un plan (P) perpendiculaire aux fentes d'entrée (4) et aux fentes de sortie (6), un rebord libre de sortie (14), disposé du côté de la face de sortie (3) et sensiblement orienté en direction de la face d'entrée (2).

8. Filtre selon la revendication 7, **caractérisé en ce que** le rebord libre de sortie (14) de l'une des lames (7) est, en projection dans un plan (P) perpendiculaire aux fentes d'entrée (4) et aux fentes de sortie (6), sensiblement de même courbure que la forme incurvée (11) de l'autre des lames immédiatement adjacente (7).

9. Filtre selon la revendication 8, **caractérisé en ce que** la fente de sortie (6) est délimitée par le rebord libre de sortie (14) de l'une des lames (7) et par la forme incurvée (11) de l'autre des lames immédiatement adjacente (7).
